# EUROPEAN PATENT APPLICATION

(11) **EP 0 977 110 A2**
(43) Date of publication of application: **02.02.2000**
(21) Application number: 99301039.6
(22) Date of filing: 12.02.1999
(51) Int. Cl.: G06F 1/16

(54) **PCMCIA compartment**

(30) Priority: 30.07.1998 US 126506
(71) Applicant: Xybernaut Corporation, Fairfax, Virginia 22033 (US)
(72) Inventor: Jenkins, Michael D., Burke, Virginia 22015 (US); Williams, John W., Osage Beach, Missouri 65065 (US); Ronzani, Peter A., Los Gatos, California 95030 (US); Hong, Peter S., Centreville, Virginia 20120 (US)
(74) Representative: Goode, Ian Roy

(57) **Abstract**

A compartment for PCMCIA cards (48) that provides for increased protection of the cards when used in computers, especially wearable computers (1). The compartment is covered by a slidable door (47) which can be moved to accommodate various sizes of PCMCIA cards with various types of projections (46). Since the entire horizontal portion of a PCMCIA card will seat in the compartment, a firm support is provided for the entire card.

## Description

This invention relates to a computer component and, more specifically, to a housing for PCMCIA cards and the like.

PCMCIA is the term commonly used to refer to *Personal Computer Memory Card International Association*. PCMCIA is an organization consisting of some 500 companies that have developed a standard for small, credit card-sized devices, called *PC Cards*. Originally these PC cards were initially intended for use in adding memory to portable lap top computers; the PCMCIA standard has been expanded several times and is now suitable for many types of devices. There are in fact three types of PCMCIA cards. All three have the same rectangular size (85.6 by 54 millimeters), but different widths and outside terminal portions. As defined in Personal Computer Dictionary by Philip E. Margolis, Random House, Second Edition:
· Type I cards can be up to 3.3 mm thick, and are used primarily for adding additional ROM or RAM to a computer.
· Type II cards can be up to 5.5 mm thick. These cards are often used for modem and fax modem cards.
· Type III cards can be up to 10.5 mm thick, which is sufficiently large for portable disk drives.

As with the cards, PCMCIA slots also come in three sizes;
· A Type I slot can hold one Type I card.
· A Type II slot can hold one Type II card or one Type I card.
· A Type III slot can hold one Type III card or a Type I and Type II card.

Ideally, you should be able to exchange PC Cards on the fly, without rebooting your computer. For example, you should be able to slip in a fax modem card when you want to send a fax and then, when you are done, replace the fax modem card with a memory card. Unfortunately, because of deficiencies in the initial standard and poor implementations by card manufacturers, this has sometimes not worked as planned. However, the standard appears to be reaching a level of maturity where such plug-and-play installation is becoming a reality.

Some analysts believe that the PC card has the potential to become the dominant expansion technology for desktop model computers as well as portable computers.

PCMCIA cards are primarily designed to be fitted into PCMCIA slots; however because of the potential for damage to the portion of the P.C. card that extends out of the slot (dongle), a complete PCMCIA housing has been proposed in co-pending European patent application 98 309 259.4. This housing with a door closing encloses a complete Type I or Type II or Type III card but cannot accommodate PC cards with large upwardly projecting end attachments.

In voice activated wearable computers, the PCMCIA door on the Mobile Assistant® (133P or MA IV) as discussed in European patent application 98 309 259.4 cannot accommodate all PCMCIA cards. This is because some PCMCIA card manufacturers have cumbersome attachments at the end of their cards. This is due, in part, because these manufacturers are driven by current standards of connectors and the need to conform to these standards. For example, Speech Solutions manufactures a Type II DSP-based speech recognition card that requires the user to attach a standard RCA-microphone jack to the card. Because there already exist microphones that have a certain type connector, Speech Solutions must be able to accommodate most of these connector types. This limits the minimum physical size the connector can be (in this case, it has to accommodate a 1/8 inch RCA jack). Other manufactures also have little or no flexibility to the size the PCMCIA connector can be, they are either limited by physical size of the device they want to attach to the PCMCIA card or are limited by what size the connector can be and still provide the necessary functionality of the card. An example of this might be a PCMCIA card that provides a wireless connection for communicating with other computers. In this example there is a need to have an antenna attached to the PCMCIA card in order for the card to be able to communicate with other devices. The challenge is to provide the smallest antenna possible and still deliver acceptable results. It should be kept in mind that the smaller the antenna, the smaller the area that the antenna can cover. This a balancing act that the manufacturer of the device has to deal with. There is a need to minimize the size of the device as much as possible without limiting the functionality of the device itself.

It is therefore an object of this invention to provide a PCMCIA (PC) card housing devoid of the above noted disadvantages.

Another object of this invention is to provide a PCMCIA card housing having a movable door adapted to accommodate various size and shapes of PCMCIA cards.

A further object of this invention is to provide a PC card housing that will minimize damage to any portion of the card including the end extending dongle.

Still a further object of this invention is to provide a sliding or movable door which covers said housing wherein the movable door provides for card enclosure in the housing with a minimum exposure of card components.

Yet another object of this invention is to provide a PC card housing and movable door that can accommodate Type I, Type II and Type III PCMCIA cards.

Another further object of this invention is to provide a PC card housing wherein a PC card can easily be inserted or removed from the computer.

Yet still another object of this invention is to provide a PCMCIA card housing where the card does not extend horizontally or longitudinally beyond the terminal portion of a computer where it could be damaged.

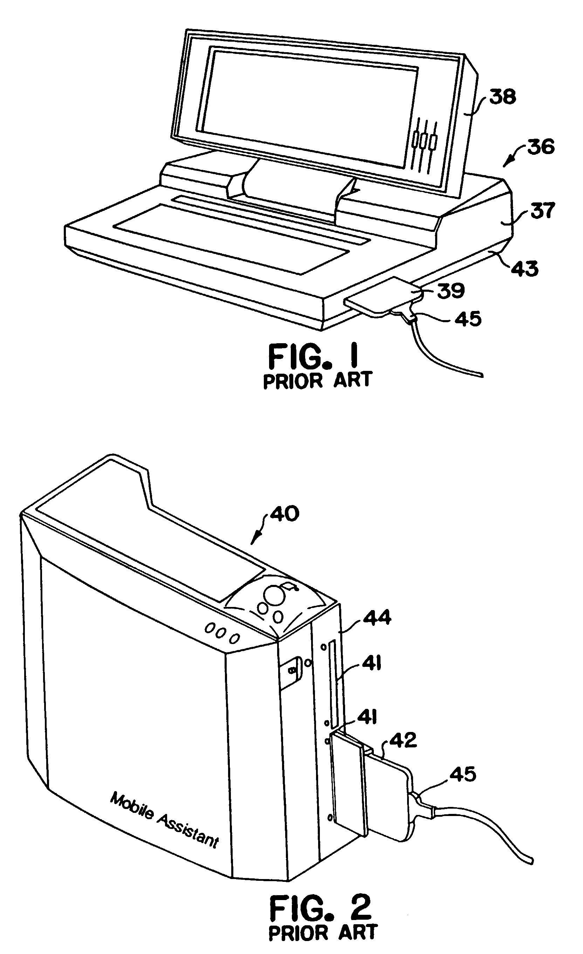

These and further objects of this invention are accomplished by a PCMCIA card housing that is large enough to accommodate all types of PCMCIA cards, with a flexible, slidable or movable door closure. This innovative door closure minimizes risk of damage to the dongle and other parts of the card. In prior art devices a substantial portion of the PCMCIA dongle is longitudinally exposed because it projects substantially out from the side portions of a computer. This is particularly undesirable in movable computers such as laptop or wearable computers of the prior art (see Figures 1 and 2 of this disclosure).

As provided by the present invention, a solution to this problem would be to allow the PCMCIA door to slide back, thus allowing the PCMCIA opening to accept non-standard or large dongled cards. To prevent the PCMCIA opening from being exposed to the outside environments, the PCMCIA door can have attached to the door a rubber grommet that would provide protection to the inside of the PCMCIA compartment.

The slide back construction of the door of this invention is primarily designed for use with mobile computers but can be easily adapted for use with conventional computers or laptop computers. While the description of the door of this invention will be defined throughout this disclosure as used in a mobile computer, it should be understood that it can also be used in any type of computer that uses a PCMCIA card.

Embodiments of the invention will now be described, by way of example, with reference to the accompanying drawings, in which:
Figure 1 is a perspective view of a laptop computer with a prior art PCMCIA card slot where the card extends longitudinally beyond the terminal end of the computer.
Figure 2 is a perspective view of a mobile computer with a prior art PCMCIA card slot where the core extends longitudinally beyond the terminal end of the computer.
Figure 3A is a perspective view of a mobile wearable computer with a prior art hinged door that encloses the PCMCIA card housing.
Figure 3B is the computer of figure 3A with PCMCIA card having an upwardly projecting terminal portion.
Figure 4 is a perspective view of a mobile wearable computer including the PCMCIA housing and movable door of this invention.
Figure 5 illustrates by perspective views various type PCMCIA cards used in present day computers.
Figure 6 is a perspective view of a mobile wearable computer including a first embodiment of the movable door of this invention when it is closed.
Figure 7 is a perspective view of the mobile wearable computer of fig. 6 with the movable door open.
Figure 8 is a perspective view of a mobile wearable computer including a second embodiment of the movable door of this invention in the open mode.
Figure 9 is the computer of Figure 8 with the movable door in a closed mode.

In figure 1 a laptop computer 36 as well known in the prior art is illustrated. The laptop 36 has the conventional components of a computer including a computer laptop housing 37 and a monitor 38. The PCMCIA (PC card) card 39 is shown as conventionally used and attached in a laptop 36. It can be seen in figure 1 that PC card 39 and its dongle 45 extend longitudinally to a large degree outside of the housing 37 beyond computer end 43 which exposes it to damage if contacted by any substantial force. Also in figure 2 a prior art mobile computer 40 is shown with PC card slot openings 41 which are adapted to receive PC cards 42. In both prior art devices shown in figures 1 and 2, the PC cards 39 and 42 and their dongles 45 when in use extend longitudinally substantially beyond the side terminal computer portions 43 and 44 of the laptop 36 and mobile computers 40, respectively. In these prior art devices, the PC cards can be easily broken or damaged, especially in mobile computers, thus rendering the computer capability provided by the PCMCIA (PC) card non-functional. If the PCMCIA card only extended perpendicular to the longitudinal axis of the mobile computer, the card would be much less liable to be damaged.

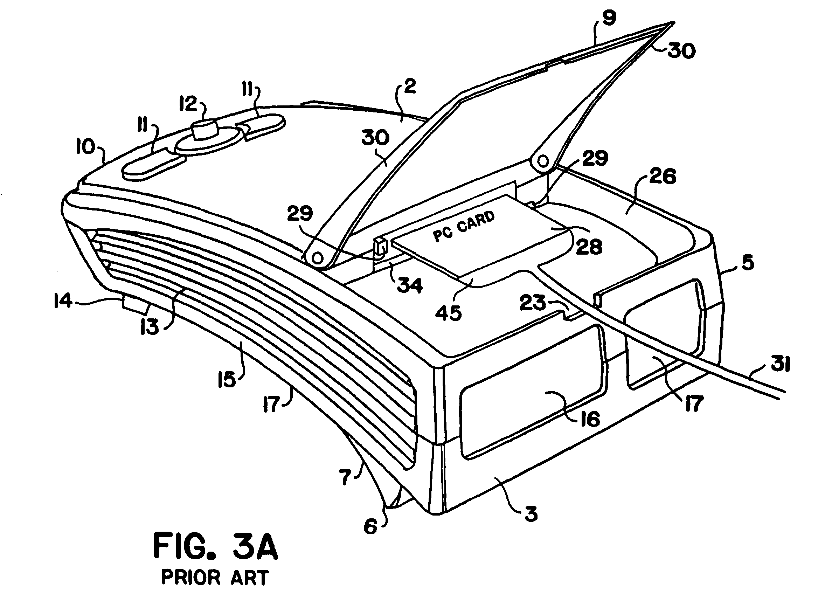

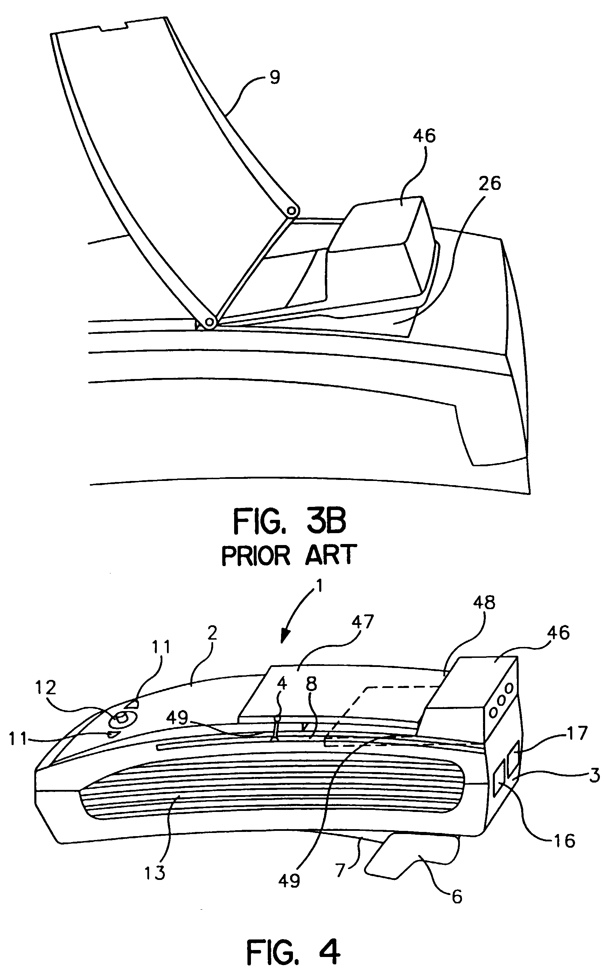

In figure 3A the prior art mobile body-worn or body-supported computer 1 of European patent application 98 309 259.4 is shown. In this figure, a lift hinged door 9 is shown which opens into a PC card compartment 26. When the PC card 28 is housed in compartment 26 and door 9 is closed, the cable 31 connecting from the housed PC card 28 is extended through slot 23. In one embodiment of this prior art mobile computer the door 9 when open exposes a connection 34 for at least one PCMCIA card(s) (PC cards) 28 (one to four cards). This is an improvement of importance over the structures of Figs. 1 and 2 since longitudinally extending PCMCIA cards (PC cards) shown in figures 1 and 2 are exposed beyond the computer side and can easily be broken or damaged thus rendering the computer capability provided by the PCMCIA card non-functional. In the computer shown in figure 3A, the PC cards of Type I, II or III are housed totally within the housing 26, only the cable or connector 27 or upward projection 46, if any (figure 3B), extends out from the housing 26 and hinged door 9 through slot 23. Also, the housing 26 permits sealing 30 around the door to make it weatherproof when worn outdoors. This internal housing 26 now provides means to prevent damaging the PC card 28 and means to weatherproof the card 28 and housing 26 from rain, water, snow or other inclement conditions. Ejecting means on buttons 29 are now easier to get to than the prior art buttons which are recessed and are hard to access. In addition, the pressure points on the PC card 28 are reduced in the present embodiment to further minimize damage to the card 28. Resilient waterproofing seal 30 is used to weatherproof the door and, as noted protect the interior on housing 26 and card 28 from damage resulting from weather conditions. In figure 3A cable 31 which is connected to card 28 within housing 26 is shown with door 9 open but when closed it will hermetically seal in card 28.

In figures 4, 6, 7, 8 and 9 (as well as in the prior art computer of figure 3A), on the top front portion 1 0 of the computer housing 2 are central buttons 11 and joy stick or lever 12. The lever 12 is used to move and control a mouse pointer when the computer 1 is used as a mobile or conventional computer. The control buttons 11 are used for program execution or menu selection when the computer 1 is used as a conventional computer. On the sides of the computer 1 are located vent louvers (or a heat sink) 13 which allow the heat from inside the computer housing 2 to be dissipated or vented out to the atmosphere. These ribbed side vents or louvers 13 help reduce the inside heat which heat could cause malfunctioning or slowing down of the computer functions. The computer housing 2 is symmetrical so that when it is worn on either the right-hand side or left-hand side of the user's waist, the back section 5, peripheral connector or computer terminal section 3 and resulting cables will always face the back of the user. When the computer 1 is used or converted into a conventional computer and placed on a flat desk or other surface, a stationary stand 14 is used to support the front section 10 of the computer. This front stand 14 may also used as a belt loop (or handle) as shown in figure 3A.

This computer of the present invention is generally similar to that shown in figure 3A except that housing 26 is made larger and door 9 is movable along the horizontal axis of computer 1 to accommodate all type PCMCIA cards. When computer 1 is used or converted to a conventional computer, cables 4 connect to components of a conventional computer such as monitors, keyboards, power supplies or any other desirable component. The louvered sides or vents 13 allow heat dissipation in this mode of use.

The top front 10 of the computer has control buttons 11 which are easily accessible to both right and left-handed users. When the computer housing 2 is turned upside down in changing from right-hand to left-hand use, the controls of buttons 11 and mouse lever 12 always face the front of the user for easy access and use. Conversely, when right side 15 is facing up or down when worn, the controls 11 and 12 always face the front, cables 4 and outlets section 3 always face the back of the user. Controls or software can be provided to convert or reverse the functions of controls or buttons 11. Versa Point® mouse pointing technology may be used as one suitable means in controls 11 and 12. Versa Point® is a trademark of Interlink Electronics of 547 Flynn Rd., Camarillo, CA 93012. Opening 22 is IRDA port that can be used for wireless communications. IRDA (Infra Red Data Association) ports are known, for example, as disclosed in U.S. patent 5,491,651 and other publications. IRDA are used as transceivers (transmit and receive) to communicate with local area networks, with printers, with another computer for transferring of information or data and other desired uses. The positioning of offset or recessed bottom extension 6 is shown slightly indented and below back portion 5 of the computer housing 2. The curvature 17 of housing 2 which is adjacent to the users body is shown in figure 4. While the drawings show (for clarity purposes only) a generally rectangular configuration for housing 2, other shapes or configurations may be used if desirable. For example, an oval or circular configuration may be used if the other specifics of this invention as claimed are present. Openings 16 and 17 provide means for connecting to computer 1 other peripheral equipment such as floppy drives, bar code scanners, VGA port or external monitor connectors. Housing 2 preferably is constructed of a lightweight, structurally strong plastic. Peripheral outlets in section 3, any suitable number of them, may be used and are positioned in bottom extension 6. Opening 23 is a cable opening for cables used with PCMCIA card slots.

While the structure of figure 3A is perfectly designed to protect dongles 45 from damage, it can be seen in figure 3B that PCMCIA end extensions 46 will not fit in compartment 26 of the structure shown in figure 3A and 3B. The door 9 also will not close if the hinged door 9 of figure 3A is used. Not only is the compartment 26 of the computer housing shown in figs. 3A and 3B, not large enough to accommodate the PCMCIA card with projection 46, but also the door 9 will not close. Accordingly, the housing compartment 26 of the present invention needed to be enlarged and door 9 of figure 3A needed to be converted to a movable door 47 as shown in figure 4.

In figure 4, the PCMCIA card 48 fits into compartment 26 and has a solid underneath support and a coverage by movable door 47 of all but the upward projection 46. No part of the PCMCIA card extends longitudinally beyond the end portion 3 of the computer. Thus, no component or dongle extends out where it could be easily damaged. An upward projection such as upward extension 46 will be within the limits of the computer and will not jut outward but rather will be within the confines of the computer 1. A waterproof edging 49 can be put around the periphery of door 47 and the upper section of compartment 26 to ensure protection to the inside of the PCMCIA compartment 26. While door 47 is shown in figure 4 as being slightly ajar and not touching end extension 46, this is for clarity only; in actual use door 47 would fit snugly against upward extension 46. The movable door 47 can fit above the top 2 of the computer housing 2 when slid back, and will fit flush with compartment housing opening 26 when in its closed mode.

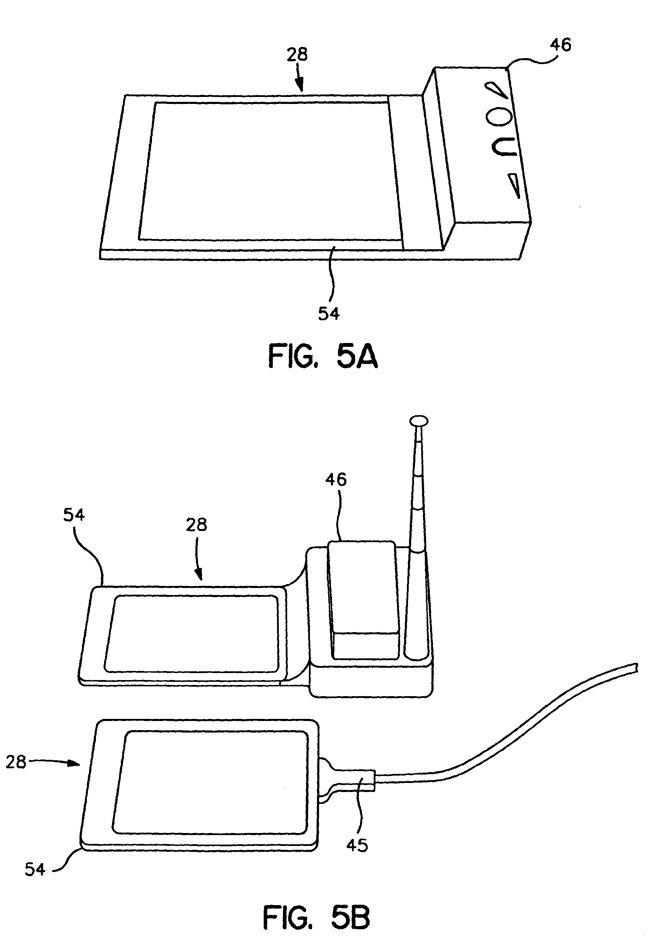

In figure 5, different types of PCMCIA cards are shown, each of which can be properly housed in compartment 26 of this invention. Type I, II and III PCMCIA cards are shown in figure 5.

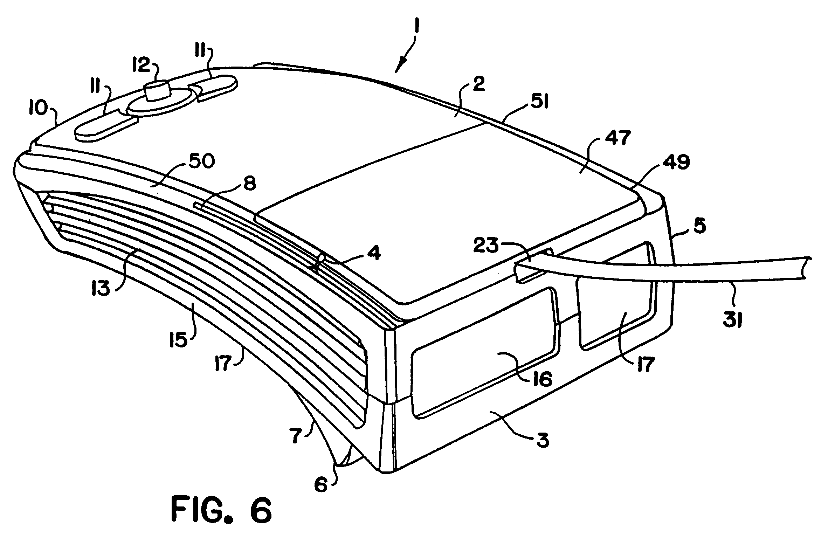

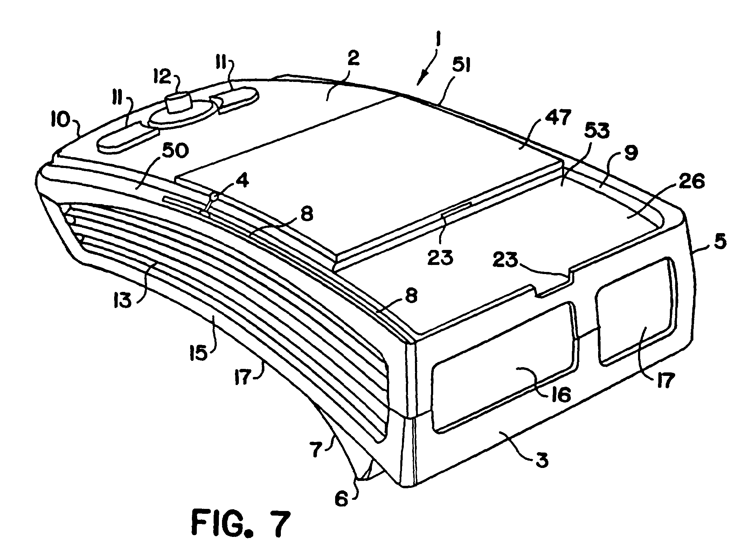

Figures 4, 6, 7, 8 and 9 illustrate the novel PCMCIA compartment and movable door 47 of this invention. Figure 4 shows the door 47 moved above and abutting computer top 2; this is accomplished by a structure shown in figures 6 and 7. In figure 6 a sliding door 47 is connected by brackets 4 on both its sides 50 and 51 with bracket tracks 8. The end top portion of bracket 4 is fixed to the sides of door 47, and the end bottom portion of bracket 4 is slidably movable in track 8. When door 47 is moved or pushed back (toward controls 11 and 12) the door 47 fits above the top surface of computer housing 2 as shown in figure 7. This open mode shown in figure 7 leaves ample room in PCMCIA compartment housing 26 to accommodate projecting portions of PCMCIA cards, as shown in figure 4. As seen in fig. 4, the projecting portion 46 does not extend longitudinally beyond the end section 3 of the computer. Portion 46 will only extend upwardly, and not longitudinally beyond the terminal portion 3 of computer 1 where it could be damaged easily. This type of accommodation gives the PCMCIA card proper physical support within compartment 26 which is especially important in a wearable computer such as the Mobile Assistant® by Xybernaut Corporation. Once door 47 closes against projection or end extensions 46, the PCMCIA card is held firmly in place and projection 46 does not extend longitudinally beyond terminal portion 3 of the computer 1. Tracks 8 run along both sides 50 and 51 of the mobile computer 1 for a length equal to the desired movement of door 47. Slots 23 still are used to permit cables from dongles 45 to project when a standard PCMCIA card is used without an upward projection 46.

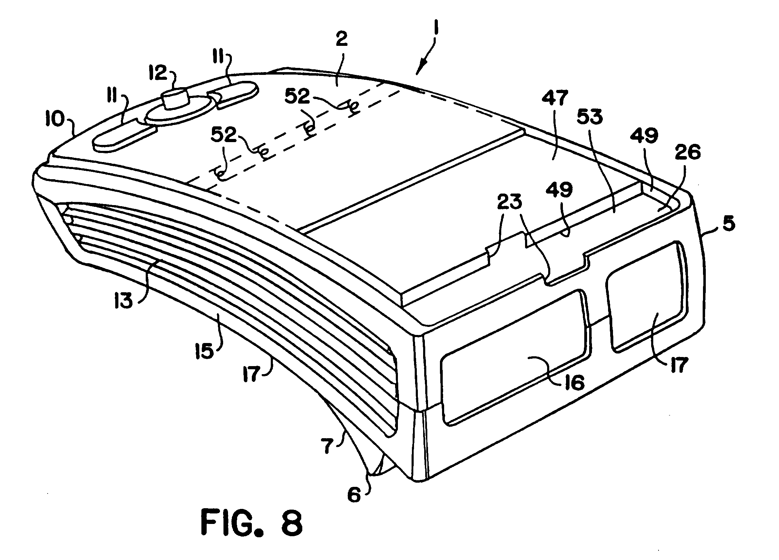

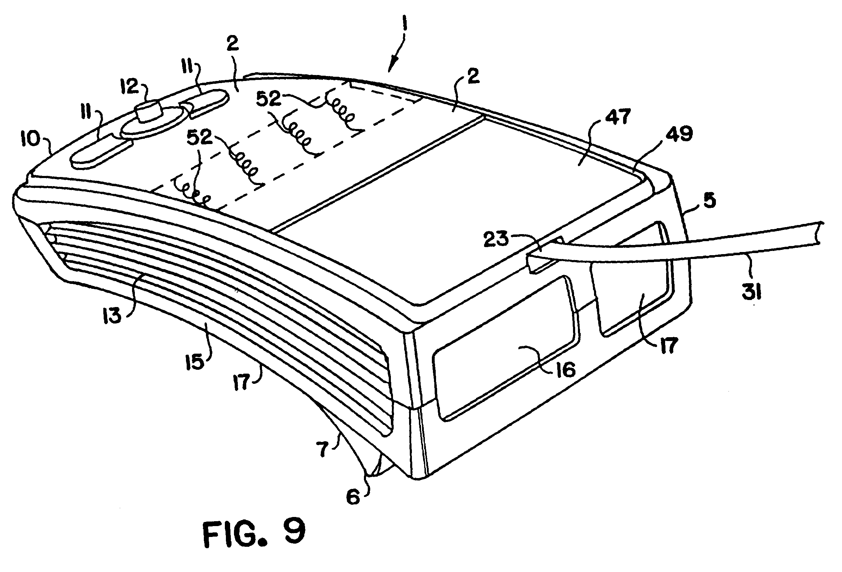

In figures 8 and 9, a second embodiment of the movable door 47 is illustrated. Here the door 47 moves in or under the top surface of computer top 2. In this embodiment, the end of the door 47 closest to controls 11 and 12 is spring loaded by the use of a plurality of springs 52. As door 47 is pushed backward toward components 10, 11 and 12, the door provides an upper opening 53 in compartment 26 through which a PCMCIA projection 46 will extend. Door 47 then because it is spring loaded will push up against the projection 46 (as shown in Fig. 4) and hold the PCMCIA card in position. As noted earlier, a flexible rubber waterproofing element 49 can be put around the periphery of door 47 and opening 53 to prevent the opening or compartment 26 from being exposed to the outside environments. By "rubber" as used throughout, it is intended that any suitable grommet in addition to rubber may be used. The movable door 47 can be spring loaded as shown in figures 8 and 9 or can be side hinged as shown in figures 6 and 7. Obviously, any suitable movable door 47 will be considered within this invention.

In figure 5 various PCMCIA cards are illustrated, each having at least a horizontal or base portion 54 and some having an upwardly projecting portion 46. The movable compartment door 47 will cover substantially all of the horizontal portion 54 of a PCMCIA card but not any upwardly projecting portion 46 thereof; see in this regard figure 4, where portion 46 does not jut out beyond section 3. The compartment of recessed PCMCIA card housing 26 will contain substantially the entire card therein so that only the projecting portion 46 of the PCMCIA card is exposed. The PCMCIA card 28 thus can fully seat within the compartment 26 so that the movable door 47 will fit over the horizontal PCMCIA card portion 54 and abut against the upwardly projecting portion 46 of the PCMCIA card 28. The compartment 26 and movable door 47 of this invention provides the most secure known support for PCMCIA cards. Not only is the card support an important advantage of this invention, but also the ease with which a card may be inserted and held in a mobile or other computer structure.

## Claims

1. A compartment in a computer for enclosing at least a portion of a PCMCIA card which comprises a recessed card housing having dimensions large enough for said card to fully seat therein and a movable door positioned above said card housing, said movable door having means to cover substantially all of a horizontal portion of said PCMCIA card, said housing having means to contain therein substantially all of said horizontal portion of said PCMCIA card in a manner so that only a projecting portion of said card is upwardly exposed but does not extend longitudinally beyond a terminal section of said computer.

2. A PCMCIA card compartment for a computer comprising a recessed card housing and a movable door having means to enclose at least a portion of an opening above said housing, said housing having dimensions sufficient for said card to fully seat therein, said movable door positioned above said housing and movable through an entire portion of said opening, said movable door having means to cover substantially all of a horizontal portion of said PCMCIA card, said housing having means to contain said card in a manner so that only a projecting portion of said card is upwardly exposed but does not extend longitudinally beyond a terminal section of said computer.

3. The compartment of claim 1 or claim 2 wherein when a PCMCIA card having only a horizontal portion is used, said housing and said movable door will enclose substantially the entire card.

4. The compartment of claim 1 or claim 2 wherein when a PCMCIA card having a horizontal portion and a projecting portion is used, said housing and said movable door will enclose substantially the entire horizontal portion.

5. The compartment of any one of claim 1 to 4 wherein said movable door has hinges which are side hinged, wherein said hinges travel along a track located in a side section of a structure.

6. The compartment of any one of claims 1 to 5 wherein said movable door is spring loaded above said card housing in a manner which will permit said door to exert pressure upon said card to hold it in place.

7. The compartment of any one of claims 1 to 6 wherein either or both of said housing and said movable door have rubber grommets around their peripheral portions to protect the interior of said housing from weather elements.

8. The compartment of any one of claims 1 to 7 wherein said movable door has means to fit above a top or other surface of said computer.

9. The compartment of any one of claims 1 to 7 wherein said movable door has means to fit inside a top or other surface of said computer.

10. A computer including a recessed card housing for enclosing alternative kinds of PCMCIA cards, said alternative kinds of cards including a first alternative which comprises a substantially planar card and a second alternative which comprises a card including a planar portion and a projecting portion which projects out of the plane of said planar portion; the card housing including a movable door which encloses substantially all of card of the first alternative kind within the card housing, and which encloses substantially all of the planar portion of the second alternative kind of card so that only the projecting portion is not enclosed by the card housing.

11. The computer of claim 10 wherein said door is slidably mounted in an external wall of the computer housing.

12. The computer of claim 11 wherein the door, in its closed position, abuts the projecting portion of the enclosed card in the case of a card of the second alternative kind.
